# FASCICULE DE BREVET EUROPEEN

(11) **EP 1 798 022 B1**
(45) Date de publication et mention de la délivrance du brevet: **02.07.2008**
(21) Numéro de dépôt: 06125664.0
(22) Date de dépôt: 08.12.2006
(51) Int. Cl.: B29D 30/24, B29D 30/26, B29D 30/32

(54) **Membrane de retournement zone basse**
Membran für das Umwenden im unteren Bereich
Lower area return diaphragm

(30) Priorité: 14.12.2005 FR 0513097
(43) Date de publication de la demande: 20.06.2007
(73) Titulaire: Société de Technologie Michelin, 63000 Clermont-Ferrand (FR); Michelin Recherche et Technique S.A., 1463 Granges-Paccot (CH)
(72) Inventeur: Ravat, Stéphane, 63100 Clermont-Ferrand (FR)
(74) Mandataire: Dequire, Philippe Jean-Marie Denis

(56) Documents cités:
- EP-A- 0 492 239
- EP-A- 1 510 330
- DE-A1- 3 421 165
- US-B1- 6 585 022
- US-B1- 6 676 788

## Description

L'invention concerne un tambour de conformation d'une ébauche de pneumatique selon le préambule de la revendication 1.

Un tambour de cette sorte est connu par le document EP-A-0 492 239.

La fabrication des ébauches de pneumatique se fait, selon une méthode connue, en assemblant, dans un premier temps, des produits caoutchoutiques profilés sur un premier tambour, de forme généralement cylindrique, afin d'obtenir un manchon plus communément désigné sous le vocable de carcasse. La carcasse comprend usuellement une nappe de renfort carcasse ancrée à ses deux extrémités axiales à des anneaux de renfort circonférentiels destinés à constituer la zone basse du pneumatique, ainsi que des profilés destinés à assurer l'étanchéité du pneumatique ou à renforcer des zones particulières.

Dans un second temps, la carcasse est placée sur un moyen apte à transformer l'ébauche de pneumatique de forme cylindrique formée par la carcasse, en une ébauche de pneumatique de forme toroïdale.

Après avoir réalisé cette étape dite de conformation, il est alors possible d'assembler les éléments constituants la zone du sommet comprenant entre autre, les nappes de renfort sommet et une bande de roulement.

Cette transformation peut s'opérer en gonflant une membrane placée à l'intérieur du manchon cylindrique entre les deux anneaux de renforcement du bourrelet.

Plus généralement, la carcasse est disposée sur un moyen de conformation et d'assemblage comprenant deux moyens de réception placés en vis-à-vis et destinés à maintenir la carcasse à conformer par l'intermédiaire des bourrelets. Ces moyens de maintien sont aptes à préserver un contact étanche avec lesdits bourrelets. On procède à l'opération de conformation en augmentant la pression d'air à l'intérieur du volume délimité par les moyens de maintien et par la carcasse du pneumatique, et en rapprochant les moyens de maintien axialement l'une de l'autre.

Ces moyens de maintien comprennent généralement un élément circonférentiel mobile radialement. En position expansée, ce moyen de serrage permet d'assurer le maintien et l'étanchéité au niveau du bourrelet. En position rétractée, ce moyen autorise l'introduction de la carcasse et l'extraction de l'ébauche de pneumatique.

De manière additionnelle, il est aussi possible d'adjoindre des moyens de maintien de la zone basse placés axialement à l'intérieur du volume délimité par le pneumatique, ou encore une membrane de rabattage disposée axialement à l'extérieur du volume délimité par le pneumatique et destinée à favoriser le rabattage des profilés caoutchoutiques préalablement disposés sur une zone d'assemblage du tambour de conformation et d'assemblage.

Ces technologies sont décrites, à titre d'exemple, dans le brevet EP 468 580 ou encore dans le brevet DE 39 07 121.

On remarquera que les moyens de conformation et d'assemblage décrits dans ces brevets sont particulièrement bien adaptés pour conformer des carcasses dont la zone basse comprend un anneau de renforcement autour duquel il n'est pas nécessaire de faire tourner l'ancrage de la nappe de renforcement carcasse et les produits constituants le bourrelet, pendant le passage de la carcasse de la forme cylindrique à la forme toroïdale.

Il peut s'avérer également intéressant de déposer des profilés destinés à former la zone basse du pneumatique avant d'introduire la carcasse. Ces produits peuvent subir des déplacements axiaux non maîtrisés et incompatibles avec la précision d'assemblage recherchée, lors de la saisie de la carcasse.

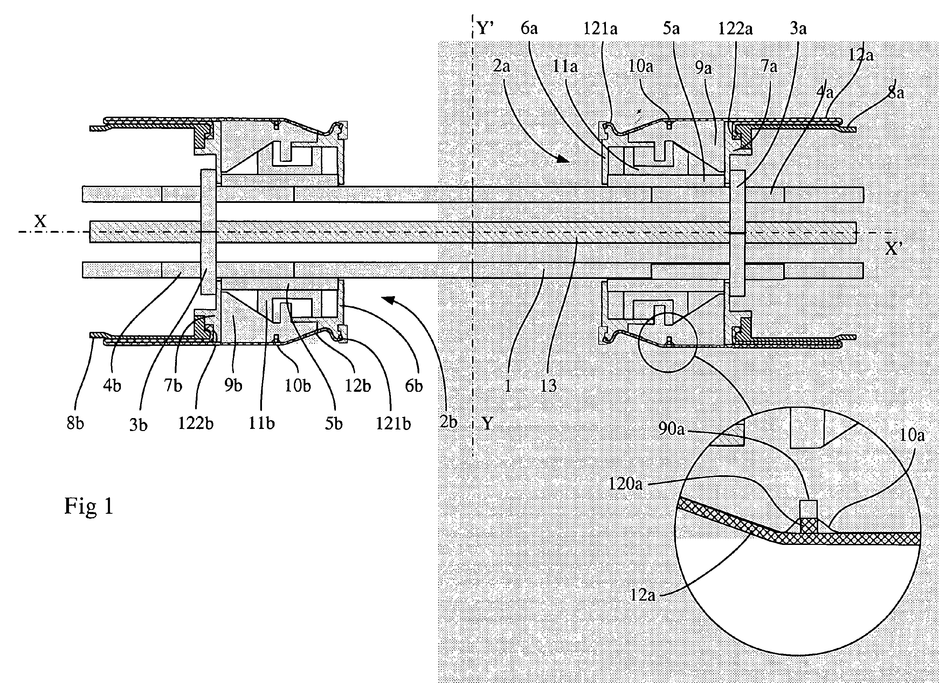

A cet effet, la publication EP 492 239 propose de placer une ligne d'ancrage circonférentielle apte à empêcher tout glissement axial de la membrane dans cette zone. Cette ligne d'ancrage est généralement située à l'aplomb de la zone où est déposé le bloc talon. Un tambour de ce type est schématisé à la figure 1.

Ce tambour selon l'art antérieur connu comprend un arbre central 1 relié à un bâti (non représenté) et entraîné en rotation par un moteur (non représenté) autour de l'axe XX'. L'axe rotatif 1 supporte deux moyens de maintien des bourrelets (2a, 2b) montés en vis-à-vis par rapport au plan de symétrie YY'. Chaque moyen de maintien des bourrelets comprend un support (5a, 5b) coulissant axialement sur l'arbre central 1. Les supports coulissant (5a, 5b) sont agencés de manière à former un contact étanche à l'air avec l'arbre central 1. Chacun des supports coulissant comprend également un ensemble de segments de reprise (9a, 9b) répartis circonférentiellement autour de l'axe XX' et aptes à se déplacer radialement sous l'action d'un coulisseau (11a, 11b) mobile axialement. Les segments de reprise (9a, 9b) comportent un siège de réception des bourrelets (10a, 10b) et sont aptes à exercer une pression radiale sur les bourrelets de la carcasse.

Deux couronnes circulaires (6a, 7a, 6b, 7b) sont fixées aux deux extrémités axiales du support coulissant (5a, 5b) et servent de guide aux segments de reprise (9a, 9b) lors du mouvement radial desdits segments.

Une membrane de rabattage (12a, 12b) est ancrée de manière étanche par ses deux extrémités axiales (121a, 122a, 121b, 122b) sur la circonférence radialement externe de chacune des couronnes (6a, 7a, 6b, 7b). Les couronnes (7a, 7b) situées à l'extrémité axiale du support coulissant (2a, 2b) supportent un prolongateur (8a, 8b) sur lequel repose le lobe de la membrane de rabattage (12a, 12b).

Il peut s'avérer particulièrement intéressant comme cela est montré sur la figure 1 d'ancrer les deux extrémités axiales de la membrane de rabattage (121a, 122a, 121b, 122b) directement sur la couronne interne (6a, 6b) dans le but d'une part d'assurer l'étanchéité à l'air de la partie du moyen de maintien du bourrelet comprenant les segments de reprise mobiles radialement (9a, 9b), et d'autre part d'envelopper le plus complètement possible le bourrelet, lorsque la membrane de rabattage est activée, de manière à favoriser le plaquage sur la carcasse conformée des produits caoutchoutiques préalablement déposés sur les prolongateurs latéraux (8a, 8b).

La membrane de rabattage recouvre le siège de réception des bourrelets (10a, 10b) ce qui a également pour effet de favoriser le contact étanche entre le bourrelet du pneumatique à conformer et la zone de réception (10a, 10b) lors de l'expansion radiale des segments de reprise. La membrane est également apte à glisser au dessus du siège de réception des bourrelets (10a, 10b).

Chaque moyen de maintien (2a, 2b) est entraîné axialement le long de l'arbre central 1 par des brides mobiles (3a, 3b) se déplaçant axialement sous l'action de la rotation d'une vis motorisée 13 dans des lumières (4a, 4b) pratiquées dans l'arbre central 1. Ce mouvement axial permet de piloter le rapprochement des bourrelets pendant l'opération de conformation.

Des moyens (non représentés) permettent d'amener de l'air sous pression dans l'espace central délimité par l'arbre central et les moyens de maintien des bourrelets.

Le tambour de conformation selon l'art antérieur connu comporte donc des moyens de maintien des bourrelets (2a, 2b) montés en vis-à-vis sur un arbre central (1), chacun des moyens de maintien des bourrelets comprenant :
- un support (5a, 5b) monté mobile axialement par rapport audit arbre (1)
- un ensemble de segments de reprise (9a, 9b) distribués circonférentiellement autour de l'axe XX', circulant radialement entre deux couronnes circulaires (6a, 7a, 6b, 7b) fixées sur le support (5a, 5b), et comportant un siège de réception des bourrelets (10a, 10b),
- une membrane de rabattage (12a, 12b), apte à glisser au dessus du siège de réception des bourrelets, ancrée de manière étanche par ses deux extrémités (121a, 122a, 121b, 122b) sur la circonférence radialement externe des couronnes circulaires (6a, 7a, 6b, 7b) Cette membrane est également ancrée mécaniquement par des moyens appropriés (14a, 14b) sur les segments de reprise (9a, 9b) le long d'une ligne d'ancrage circonférentielle.

Ces caractéristiques constituent donc une partie du préambule de la revendication 1.

On observe toutefois que ladite ligne d'ancrage est disposée préférentiellement au droit de la zone de réception du bloc talon.

Ce type de tambour s'avère donc particulièrement bien adapté pour réaliser des ébauches de pneumatique dans lequel la carcasse ne subit pas de rotation autour de l'anneau de renforcement pendant l'opération de conformation. Le déplacement axial est bloqué dans les deux sens par l'ancrage circonférentiel, et la zone basse est maintenue de manière étanche pendant l'opération de conformation.

En revanche, lorsque la section de l'anneau de renforcement de la zone basse est circulaire, la nappe de renforcement carcasse et les produits constituants le bourrelet tournent autour de l'anneau de renforcement. Il convient alors de faire en sorte que les moyens de réception équipant les flasques et assurant le contact étanche avec le bourrelet soient également aptes à être entraînés en rotation de manière à accompagner le mouvement du bourrelet lors de la rotation de la zone basse autour de l'anneau de renforcement. En d'autres termes, la rotation du bourrelet autour de l'anneau de renforcement de la zone basse, entraîne le glissement axial de la membrane de rabattage.

L'invention a pour objet de résoudre le problème posé par l'assemblage et la conformation d'ébauches de pneumatiques comprenant des zones basses formées d'un anneau de renforcement circulaire pour lesquels on désire tout à la fois :
- déposer préalablement des profilés destinés à la formation de la zone basse, ce qui requière de maîtriser les déplacements dans la direction axiale d'une part,
- réaliser la conformation en autorisant la rotation des constituants de la zone basse autour de l'anneau de renforcement.

La membrane de rabattage (12a, 12b) est ancrée mécaniquement par des moyens appropriés (14a, 14b) sur les segments de reprise (9a, 9b) le long d'une ligne d'ancrage circonférentielle décalée axialement vers le centre du tambour par rapport au siège de réception des bourrelets (10a, 10b).

L'ancrage mécanique (14a, 14b) disposé a pour effet d'interdire le glissement axial de la membrane dans la direction axiale allant du centre tambour de conformation vers le bord externe dudit tambour. En effet, il a été observé que seul le blocage du mouvement axial dans cette direction s'avère nécessaire pour maintenir les produits en place pendant la phase d'expansion radiale des segments de reprise.

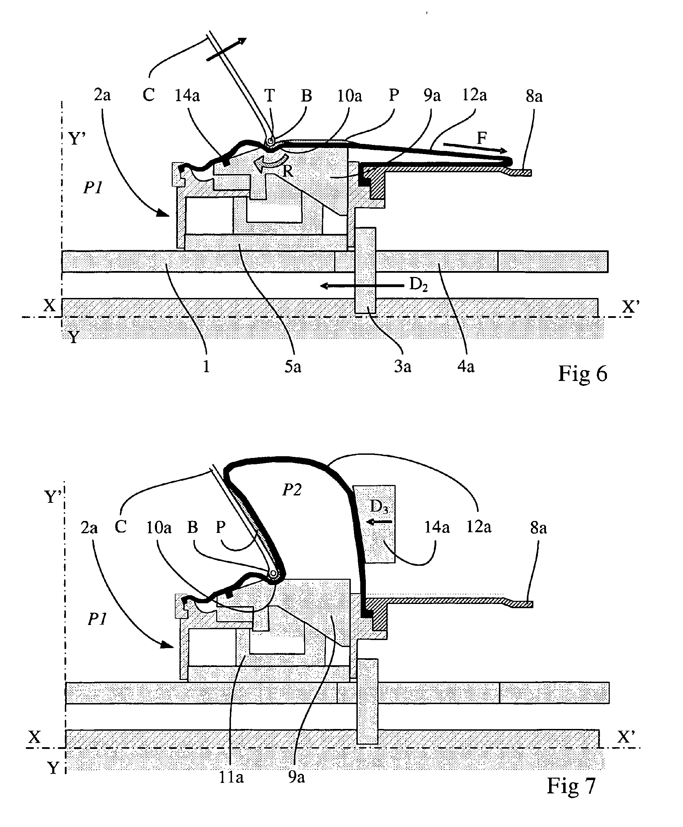

En revanche, pendant la phase de conformation et de rotation du bourrelet autour de l'anneau de renforcement de la zone basse, le bourrelet entraîne la membrane de rabattage qui glisse sur les sièges de réception des bourrelets. La partie de la membrane de rabattage située entre le bourrelet et la zone d'ancrage est mise en compression et peut être amenée à flamber et à former une boucle. Ce phénomène est illustré par les figures 6 et 7 de la présente description, et sera expliqué plus en détail dans les paragraphes suivants.

Pour que ce phénomène de flambage se produise, il convient de déterminer avec précaution la position de la ligne d'ancrage circonférentielle par rapport au siège de réception des bourrelets.

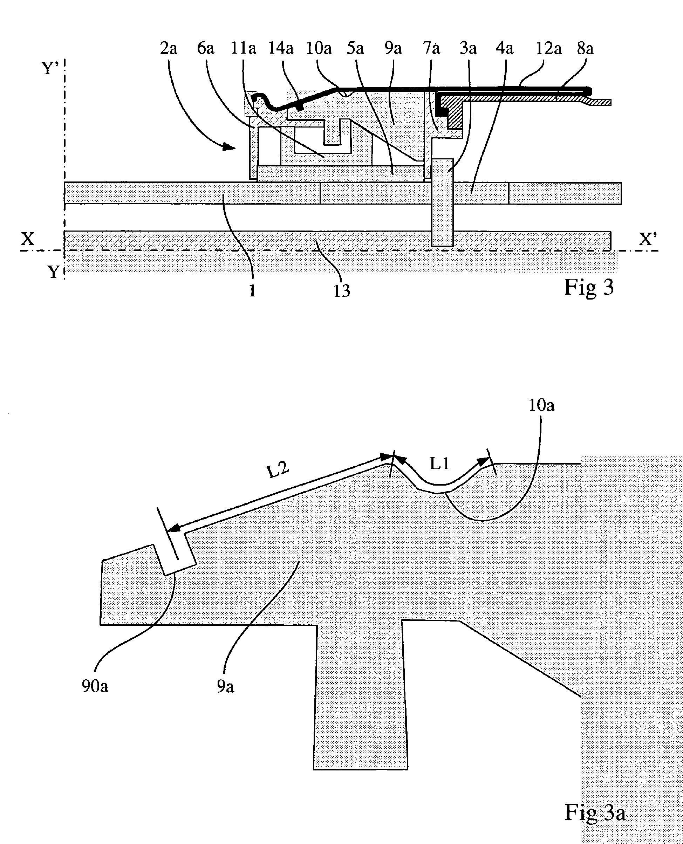

Comme cela est illustré sur la figure 3a, le siège de réception 10a d'un tambour du type destiné à réaliser des pneumatiques dont le bourrelet effectue une rotation autour de l'anneau de renforcement pendant la phase de conformation, possède une section de forme sensiblement semi circulaire pour recevoir et maintenir le bourrelet en rotation.

On peut calculer une première longueur L1 sensiblement égale à la longueur développée de la section dudit siège 10a. La longueur L2 mesure la distance entre le bord intérieur du siège 10a de réception des bourrelets et la position de la ligne d'ancrage circonférentielle.

Il a été mis en évidence que la rotation du bourrelet s'effectue sans défaut, lorsque la longueur L2 est supérieure à 0,7 L1. Ce rapport caractérise le seuil à partir duquel le phénomène de flambage évoqué ci-dessus se produit. Ce seuil est également représentatif de la rigidité des membranes couramment utilisées dans l'industrie du pneumatique.

Il n'est toutefois pas possible d'augmenter inconsidérément le rapport en question. En effet, lorsque la longueur L2 augmente, il devient malaisé de maîtriser la position axiale des profilés destinés à la formation de la zone basse en raison du fait que la moindre mise en compression de la membrane dans la direction du centre du tambour provoque un mouvement axial dans cette direction. Il a été trouvé expérimentalement que la longueur L2 doit être inférieure à 2 fois la longueur L1.

L'objet de l'invention concerne donc un tambour selon la revendication 1 reprenant les caractéristiques du préambule ci-dessus dans lequel la section du siège 10a de réception du bourrelet a une forme sensiblement circulaire de développement L1 et dans lequel la ligne d'ancrage circonférentielle de la membrane de rabattage 12a, 12b sur les segments de reprise 9a, 9b est décalée axialement vers le centre du tambour d'une longueur L2 par rapport au siège de réception des bourrelets 10a, 10b, de sorte que la longueur L2 soit comprise entre 0,7 fois et 2 fois la longueur L1.

Des modes de réalisation particuliers de l'invention font l'objet des revendications dépendantes.

Le dispositif selon l'invention permet donc de résoudre de manière simple et peu onéreuse le problème posé, et offre les avantages de précision et de régularité d'utilisation propre à ce type de tambour de conformation.

L'invention est décrite en détail dans les figures 2 à 8 en référence à la figure 1 qui illustre l'art antérieur connu le plus proche et dans lesquelles,
- la figure 2 représente une vue schématique en coupe d'un tambour de conformation selon l'invention,
- les figures 3 à 8 représentent des vues schématiques partielles des différentes étapes de mise en oeuvre d'un tambour de conformation conforme à l'invention.

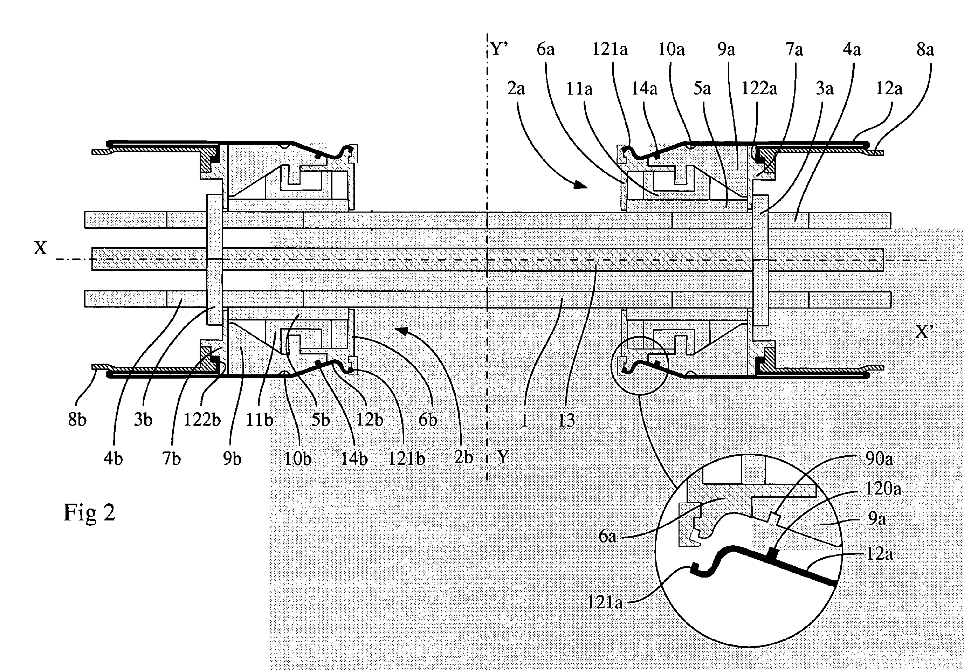

Le tambour de conformation illustré sur la figure 2 reprend l'ensemble des caractéristiques du tambour de conformation tel qu'illustré par la figure 1. On remarquera l'ancrage (14a, 14b) de la membrane de rabattage sur les segments de reprise (9a, 9b).

Les segments de reprise (9a, 9b) comportent une gorge circonférentielle 90a dont la forme est adaptée pour recevoir la saillie circulaire 120a disposée sur la partie radialement interne de la membrane rabattage (12a, 12b) comme cela est illustré dans le médaillon de la figure 2. La forme de la section de la gorge et de la saillie peut être rectangulaire ou encore trapézoïdale. D'autres formes peuvent être utilisées pour autant qu'elles confèrent un accrochage robuste de la membrane de rabattage (12a, 12b) sur les segments de reprise (9a, 9b).

Ce mode de fixation n'est bien sûr pas limitatif, et on peut tout aussi bien envisager un ancrage de la membrane de rabattage (12a, 12b) sur les segments de reprise (9a, 9b) par des moyens de fixation tels que des vis ou des rivets (non représentés) traversant la membrane de rabattage et rendus solidaires des segments de reprise (9a, 9b). On veillera toutefois dans cette configuration, à ce que l'étanchéité de la membrane de rabattage ne soit pas affectée.

Les figures 3 à 8 sont des illustrations des principales étapes de mise en oeuvre du tambour de conformation selon l'invention. Le tambour est représenté de manière schématique sous la forme d'une demi vue en coupe d'un moyen de maintien du bourrelet 2a.

La figure 3 est une illustration du tambour de conformation en position d'attente. Les segments 9a sont en position basse, c'est-à-dire que le moyen de maintien du bourrelet 2a présente un diamètre inférieur au diamètre du bourrelet de l'ébauche de pneumatique à conformer.

La figure 3a permet de visualiser la position de l'ancrage de la membrane 90a par rapport au siège de réception du bourrelet (10a). La longueur L1 qui mesure le développement de la section du siège est mesurée par rapport aux centre des rayons de raccordement du siège avec la surface du segment 9a. La longueur L2 est mesurée, dans le cas d'espèce, par rapport à l'extrémité interne de la gorge servant à recevoir la saillie placée sur la membrane. L'évaluation de la longueur L2 devant toutefois être adaptée au mode de fixation retenu.

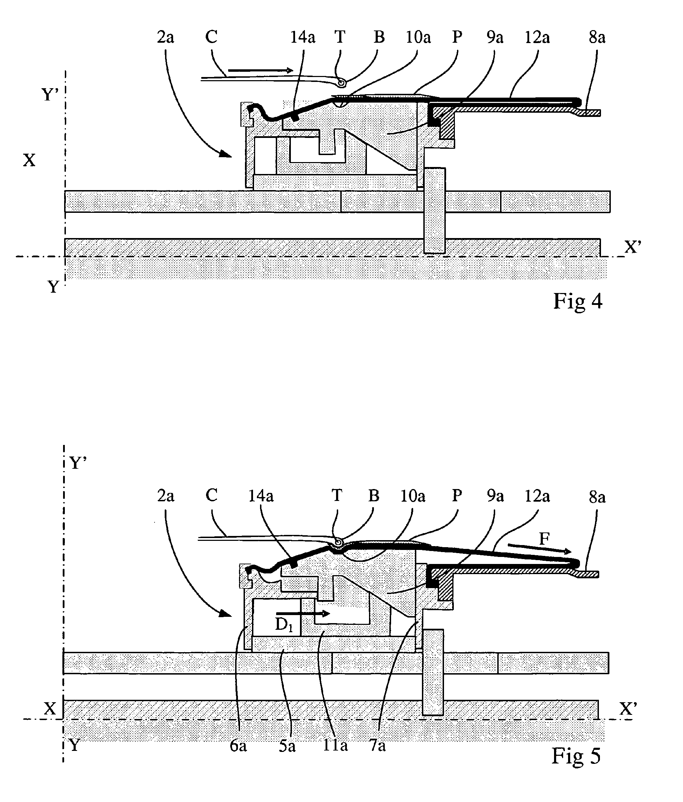

Il est ainsi possible de déposer des profilés caoutchoutiques P sur la surface externe de la membrane de rabattage 12a qui repose sur l'extension 8a comme cela est illustré à la figure 4. La position axiale des profilés est déterminée par l'architecture du pneumatique que l'on cherche à réaliser. Dans le cas d'espèce on remarquera que les profilés P recouvrent partiellement le siège de réception du bourrelet 10a.

Une carcasse C de forme généralement cylindrique est amenée sur le tambour de conformation à l'aide d'un moyen affecté à cette opération particulière (et non représenté) de manière à ce que le bourrelet B soit disposé à l'aplomb du siège de réception du bourrelet (10a).

La figure 5 illustre l'étape au cours de laquelle la carcasse est saisie par les moyens de maintien 2a. Le coulisseau 11a est déplacé dans la direction D1, ce qui a pour effet de soulever les segments de reprise 9a dans la direction radiale. Les produits profilés P viennent au contact au contact du bourrelet B. En ajustant la pression de serrage des segments 9a sur le bourrelet B, il est possible d'établir un contact étanche à l'air entre le bourrelet B et la membrane de rabattage 12a. Le bourrelet est maintenu par le moyen de maintien au niveau du siège de maintien 10a dont la forme est adaptée pour favoriser l'étanchéité de ce contact.

On observe que le déplacement des segments de reprise introduit des contraintes dans la membrane de rabattage. La résultante de ces contraintes est matérialisée par une force F sensiblement axiale qui a pour effet de tirer la membrane de rabattage axialement vers l'extérieur du tambour de conformation. Le moyen d'ancrage 14a de la membrane sur les segments de reprise 9a s'oppose à cette force et au mouvement axial de la membrane de rabattage, ce qui évite tout déplacement axial des produits P.

L'étape de conformation proprement dite de la carcasse C est illustrée à la figure 6. De l'air sous pression est injecté dans l'espace intérieur central délimité par l'arbre central, les moyens de maintien et la carcasse C. La pression *P1* qui règne dans ce volume va provoquer le gonflement de l'ébauche de pneumatique qui va passer d'une forme généralement cylindrique à une forme généralement toroïdale. La montée en pression est autorisé par les liaisons étanches établies entre l'arbre central et le support 5a, entre le support 5a et la couronne circulaire 6a, entre la couronne circulaire 6a et l'extrémité de la membrane de rabattage 12a, et entre la membrane de rabattage 12a et le bourrelet B.

Dans le même temps les moyens de maintien 2a et 2b sont déplacés axialement l'un en direction de l'autre sous l'action des brides mobiles 3a, 3b et de la vis motorisée 13.

Lors de la rotation du bourrelet B autour de l'anneau de renforcement T de la zone basse, le bourrelet entraîne dans son mouvement les produits profilés P et la membrane de rabattage 12a. La membrane de rabattage glisse sur les segments de maintien 10a dans la direction R. Il s'ensuit une mise en compression de la membrane de rabattage qui est bloquée par l'ancrage 14a. Lorsque la limite de flambage est atteinte, la membrane de rabattage forme une boucle dans la zone comprise entre le bourrelet B et la zone d'ancrage 14a comme cela est figuré sur la figure 6.

La figure 7 illustre l'étape de rabattage au cours de laquelle le volume intérieur de la membrane de rabattage 12a est porté à une pression *P2*. Ceci a pour effet d'entraîner les produits profilés P le long de la partie externe de la carcasse C. Un complément de poussée axiale peut être apporté par l'action d'un moyen 14a se déplaçant dans la direction D3. La pression *P2* est inférieure à la pression *P1*, de manière à éviter tout glissement axial de la membrane de rabattage 12a au niveau de la zone de portage 10a du bourrelet B sur les segments 9a. A cet effet il est également possible de régler la pression de serrage exercée par les segments 9a sur le bourrelet B.

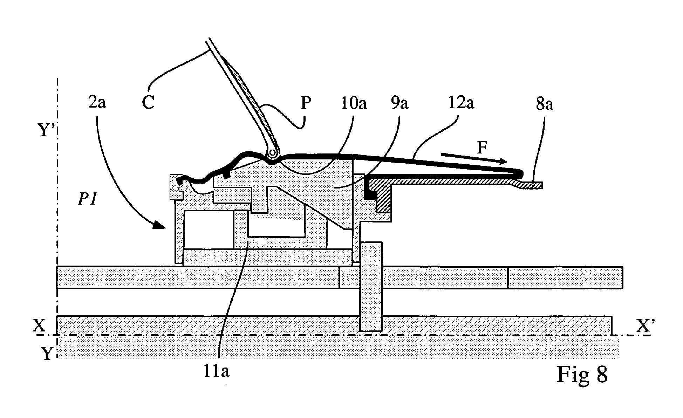

En relâchant la pression *P2* qui règne dans la membrane de rabattage celle-ci retombe sur la prolongation 8a comme cela est illustré par la figure 8.

Il est alors possible de procéder à la phase finale d'assemblage de l'ébauche de pneumatique C en amenant les produits constituants la zone sommet (non représenté). Pendant cette étape, la pression P1 est maintenue à l'intérieur de l'espace central.

Lorsque cette étape est achevée, la pression P1 est relâchée. Les segments 9a sont redescendus en actionnant le coulisseau 11a, et l'ébauche de pneumatique est extraite du tambour de conformation.

Les moyens de maintien sont déplacés axialement vers l'extérieur du tambour de manière à être prêts à recevoir la carcasse formant l'ébauche du pneumatique suivant.

On observe alors que la tension F qui règne à l'intérieur de la structure de la membrane de rabattage 12a sous l'effet des déformations qui lui sont imposées, a pour effet de ramener la membrane en position de repos comme cela est illustré à la figure 3.

A cet effet il importe donc que la membrane de rabattage soit construite de manière à pouvoir reprendre cette position de repos. De même, la zone de contact entre la membrane de rabattage et le bourrelet pourra faire l'objet d'un traitement de surface approprié pour favoriser le contact étanche entre la membrane de rabattage 12a et le bourrelet B.

Il serait également tout à fait possible d'aménager le tambour de conformation faisant l'objet de la présente description pour qu'il soit apte à réaliser l'ensemble des opérations d'assemblage de l'ébauche de pneumatique comme cela est pratiqué usuellement par les procédés connus sous le vocable de procédé un temps.

## Revendications

1. Tambour de conformation d'une ébauche de pneumatique comprenant des zones basses formées d'un anneau de renforcement circulaire, entraîné en rotation autour d'un axe XX', comportant des moyens de maintien des bourrelets montés (2a, 2b) en vis-à-vis sur un arbre central (1), chacun des moyens de maintien des bourrelets comprenant :
- un support (5a, 5b) monté mobile axialement par rapport audit arbre (1)
- un ensemble de segments de reprise (9a, 9b) distribués circonférentiellement autour de l'axe XX', circulant radialement entre deux couronnes circulaires (6a, 7a, 6b, 7b) fixées sur le support (5a, 5b), et comportant un siège de réception des bourrelets (10a, 10b),
- une membrane de rabattage (12a, 12b), apte à glisser au dessus du siège de réception des bourrelets, ancrée de manière étanche par ses deux extrémités (121a, 122a, 121b, 122b) sur la circonférence radialement externe des couronnes circulaires (6a, 7a, 6b, 7b) et ancrée mécaniquement par des moyens appropriés (14a, 14b) sur les segments de reprise (9a, 9b) le long d'une ligne d'ancrage circonférentielle (90a),
**caractérisé en ce** la section du siège (10a, 10b) de réception du bourrelet a une forme sensiblement circulaire de développement L1, et en ce que la ligne d'ancrage circonférentielle de la membrane de rabattage (12a, 12b) sur les segments de reprise (9a, 9b) est décalée axialement vers le centre du tambour d'une longueur L2 par rapport au siège de réception des bourrelets (10a, 10b), de sorte que la longueur L2 soit comprise entre 0,7 fois et 2 fois la longueur L1.

2. Tambour de conformation selon la revendication 1, dans lequel la liaison entre le support (5a, 5b) mobile axialement et l'arbre central (1) est étanche à l'air.

3. Tambour de conformation selon la revendication 2, comprenant des moyens permettent d'amener de l'air sous pression dans l'espace central délimité par l'arbre central (1) et les moyens de maintien des bourrelets (2a, 2b).

4. Tambour de conformation selon l'une des revendications 1 à 3, dans lequel les moyens d'ancrage de la membrane de rabattage (12a, 12b) sur les segments de reprise (9a, 9b) sont formés par une saillie circulaire (120) réalisée sur la membrane de rabattage (12a, 12b), coopérant avec une gorge circonférentielle (90) réalisée dans les segments de reprise (9a, 9b).

5. Tambour de conformation selon l'une des revendications 1 à 3, dans lequel, l'ancrage de la membrane de rabattage (12a, 12b) sur les segments de reprise (9a, 9b) est assuré par des moyens de fixation traversant la membrane de rabattage et solidaires des segments de reprise (9a, 9b).

6. Tambour de conformation selon l'une des revendications 1 à 5 dans lequel, lorsqu'une ébauche de pneumatique est installée sur ledit tambour au droit des sièges de réception des bourrelets (10a, 10b), l'expansion radiale des segments de reprise (9a, 9b) a pour effet d'établir un contact étanche entre les bourrelets (B) de l'ébauche de pneumatique à conformer (C) et la membrane de rabattage (12a, 12b).

## Claims

1. Shaping drum for a tyre blank comprising bottom zones formed of a circular reinforcement ring which is moved in rotation about an axis XX' comprising bead-holding means (2a, 2b) mounted opposite one another on a central spindle (1), each of the bead-holding means comprising:
- a support (5a, 5b) mounted axially movable relative to the said spindle (1),
- an assembly of return segments (9a, 9b) distributed circumferentially around the axis XX', which circulate radially between two circular rings (6a, 7a, 6b, 7b) fixed on the support (5a, 5b), and comprising a bead-receiving seat (10a, 10b),
- a turn-up membrane (12a, 12b) that can slide over the bead-receiving seat, anchored in an airtight manner by its two ends (121a, 122a, 121b, 122b) on the radially outer circumference of the circular rings (6a, 7a, 6b, 7b) and anchored mechanically by appropriate means (14a, 14b) on the return segments (9a, 9b) along a circumferential anchoring line (90a),
**characterised in that** the section of the bead-receiving seat (10a, 10b) is of essentially circular shape with a developed length L1, and the circumferential anchoring line of the turn-up membrane (12a, 12b) on the return segments (9a, 9b) is axially offset towards the centre of the drum by a length L2 relative to the bead-receiving seat (10a, 10b), the length L2 being between 0.7 and 2 times the length L1.

2. Shaping drum according to Claim 1, in which the contact between the axially movable support (5a, 5b) and the central spindle (1) is airtight.

3. Shaping drum according to Claim 2, comprising means that enable compressed air to be injected into the central space delimited by the central spindle (1) and the bead-holding means (2a, 2b).

4. Shaping drum according to any of Claims 1 to 3, in which the means for anchoring the turn-up membrane (12a, 12b) on the return segments (9a, 9b) consist of a circular protrusion (120) formed on the turn-up membrane (12a, 12b) which co-operates with a circumferential groove (90) formed in the return segments (9a, 9b).

5. Shaping drum according to any of Claims 1 to 3, in which the turn-up membrane (12a, 12b) is anchored on the return segments (9a, 9b) by fixing means that pass through the turn-up membrane and are attached to the return segments (9a, 9b).

6. Shaping drum according to any of Claims 1 to 5, in which, when a tyre blank is fitted onto the said drum opposite the bead-receiving seats (10a, 10b), the effect of the expansion of the return segments (9a, 9b) is to establish airtight contact between the beads (B) of the tyre blank (C) to be shaped and the turn-up membrane (12a, 12b).

## Patentansprüche

1. Trommel zum Formen eines Reifenrohlings, der untere Zonen enthält, die aus einem kreisförmigen Verstärkungsring gebildet sind, die um eine Achse XX' rotatorisch angetrieben wird und Mittel zum Halten von einander gegenüber angebrachten Wulsten (2a, 2b) an einer zentralen Welle (1) enthält, wobei jedes der Mittel zum Halten von Wulsten Folgendes enthält:
- einen Träger (5a, 5b), der axial beweglich in Bezug auf die Welle (1) angebracht ist,
- eine Gesamtheit von Aufnahmeelementen (9a, 9b), die in Umfangsrichtung um die Achse (XX') verteilt sind, radial zwischen zwei kreisförmigen Kränzen (6a, 7a, 6b, 7b) umlaufen, die an dem Träger (5a, 5b) befestigt sind, und einen Sitz (10a, 10b) für die Aufnahme der Wulste enthalten,
- eine Umschlagmembran (12a, 12b), die über dem Sitz für die Aufnahme der Wulste gleiten kann und durch ihre zwei Enden (121a, 122a, 121b, 122b) am radial äußeren Umfang der kreisförmigen Kränze (6a, 7a, 6b, 7b) dicht verankert sind und durch geeignete Mittel (14a, 14b) an den Aufnahmesegmenten (9a, 9b) längs einer Umfangsverankerungslinie mechanisch verankert ist,
**dadurch gekennzeichnet, dass** der Querschnitt des Sitzes (10a, 10b) für die Aufnahme des Wulstes eine im Wesentlichen kreisförmige Form mit Abwicklung L1 hat und dass die kreisförmige Verankerungslinie der Umschlagmembran (12a, 12b) an den Aufnahmesegmenten (9a, 9b) axial zum Zentrum der Trommel um eine Länge L2 in Bezug auf den Sitz (10a, 10b) für die Aufnahme der Wulste versetzt ist, derart, dass die Länge L2 im Bereich der 0,7-fachen bis 2-fachen Länge L1 liegt.

2. Formungstrommel nach Anspruch 1, wobei die Verbindung zwischen dem axial beweglichen Träger (5a, 5b) und der zentralen Welle (1) luftdicht ist.

3. Formungstrommel nach Anspruch 2, die Mittel enthält, die die Zufuhr von Druckluft in den zentralen Raum, der durch die zentrale Welle (1) und die Mittel (2a, 2b) zum Halten der Wulste begrenzt ist, ermöglichen.

4. Formungstrommel nach einem der Ansprüche 1 bis 3, wobei die Mittel zum Verankern der Umschlagmembran (12a, 12b) an den Aufnahmesegmenten (9a, 9b) durch einen kreisförmigen Vorsprung (120) gebildet sind, der an der Umschlagmembran (12a, 12b) verwirklicht ist und mit einer kreisförmigen Nut (90) zusammenwirkt, die in den Aufnahmesegmenten (9a, 9b) verwirklicht ist.

5. Formungstrommel nach einem der Ansprüche 1 bis 3, wobei die Verankerung der Umschlagmembran (12a, 12b) an den Aufnahmesegmenten (9a, 9b) durch Befestigungsmittel gewährleistet ist, die durch die Umschlagmembran verlaufen und mit den Aufnahmesegmenten (9a, 9b) fest verbunden sind.

6. Formungstrommel nach einem der Ansprüche 1 bis 5, wobei dann, wenn ein Reifenrohling an der Trommel am Ort der Sitze (10a, 10b) für die Aufnahme der Wulste installiert wird, die radiale Ausdehnung der Aufnahmesegmente (9a, 9b) bewirkt, dass ein dichter Kontakt zwischen den Wulsten (B) des zu formenden Reifenrohlings (C) und der Umschlagmembran (12a, 12b) hergestellt wird.
